## Europäisches Patentamt
## European Patent Office
## Office européen des brevets

(19)

(11) Numéro de publication: **0 106 734**
**B1**

(12) **FASCICULE DE BREVET EUROPEEN**

(45) Date de publication du fascicule du brevet:
**07.01.88**

(51) Int. Cl.⁴: **A 47 B 47/03**

(21) Numéro de dépôt: **83401814.5**

(22) Date de dépôt: **16.09.83**

(54) **Dispositif formant ossature notamment pour meuble de rangement, par exemple à rayonnage.**

(30) Priorité: **20.09.82 FR 8215799**

(43) Date de publication de la demande:
**25.04.84 Bulletin 84/17**

(45) Mention de la délivrance du brevet:
**07.01.88 Bulletin 88/1**

(84) Etats contractants désignés:
**BE CH DE GB IT LI LU NL SE**

(56) Documents cités:
**FR - A - 1 593 593**
**GB - A - 1 230 278**
**US - A - 1 336 490**
**US - A - 3 081 139**
**US - A - 3 536 016**
**US - A - 3 736 035**
**US - A - 4 045 104**

(73) Titulaire: **Frydman, Georges, 70 avenue Auguste Galtier,
F-06230 Villefranche-sur-Mer (FR)**

(72) Inventeur: **Frydman, Georges, 70 avenue Auguste
Galtier, F-06230 Villefranche-sur-Mer (FR)**

(74) Mandataire: **Portal, Gérard et al, Cabinet Z.
Weinstein 20, Avenue de Friedland, F-75008 Paris (FR)**

## Description

La présente invention a essentiellement pour objet un dispositif formant ossature rigide notamment pour meuble de rangement, par exemple à rayonnage; ou tout autre élément d'architecture intérieure.

On connait déjà divers dispositifs formant ossature rigide notamment pour meuble de rangement, par exemple à rayonnage.

Ainsi, le brevet français n° 1 593 593, ayant toutes les caractéristiques du préambule de la revendication 1, relève un dispositif comportant des montants verticaux creux définissant des logements en leurs extrémités, une plaque de fond munie de tenons, un cadre supérieur également muni de tenons, ces tenons étant destinés à venir s'encastrer dans les montants verticaux. Cependant, une telle ossature présente l'inconvénient d'être encombrante à l'état démonté car la plaque de fond à tenons est réalisée en une seule pièce, ainsi que le cadre supérieur à tenons, qui constitue des éléments non démontables.

Le brevet américain n° 4 045 104 tend à résoudre ce problème d'encombrement de l'ossature à l'état démonté. En effet, selon ce document, le cadre supérieur et le fond sont composés de traverses longitudinales et latérales indépendantes assemblées entre elles et avec les montants verticaux au moyen d'éléments spécifiques comportant trois tenons.

Cependant ce dispositif comprend un grand nombre d'éléments à assembler. Il en résulte un problème de simplicité de montage pour des utilisateurs non qualifiés.

La présente invention à pour but d'éliminer les inconvénients des dispositifs connus précités, en fournissant une solution où le nombre de pièces à assembler est limité en offrant une grande simplicité de montage.

L'invention a également pour objet de fournir une structure peu encombrante à l'état démonté d'une extrême légèreté, en vue de faciliter la manutention des éléments de fabrication, le transport, la vente en longue portée, ainsi que le montage par l'utilisateur.

Pour résoudre le problème technique posé, l'invention consiste en un dispositif formant ossature rigide, notamment pour meuble de rangement, par exemple à rayonnage, comprenant des traverses essentiellement horizontales longitudinales, des étriers essentiellement horizontaux latéraux longitudinalement espacés par lesdites traverses, des montants essentiellement verticaux maintenus latéralement espacés entre eux par lesdits étriers, des premiers moyens d'assemblage entre lesdits étriers et lesdits montants formés par des tenons extérieurement saillants disposés sensiblement dans le plan longitudinal de l'étrier et sensiblement perpendiculairement aux bords longitudinaux de l'étrier destinés à venir s'emboîter ou s'encastrer, de préférence de force, dans des logements correspondants prévus en bout des extrémités des montants verticaux, et des deuxièmes moyens d'assemblage entre lesdits étriers et lesdites traverses, les premiers moyens d'assemblage sont réalisés solidaires auxdits étriers, caractérisé en ce que les deuxième moyens d'assemblage sont formés par des goussets pratiqués aux extrémités respectives des traverses longitudinales et disposés perpendiculairement au plan longitudinal de la traverse destinés à coopérer avec des cavités prévues sur chaque face longitudinale verticale des étriers non loin de ses bords latéraux pour recevoir, de façon encastrée en position montée, les goussets associés de chaque traverse, lesdits goussets étant fixés dans lesdites cavités correspondantes par tout moyen approprié.

Ainsi, l'assemblage des deux montants verticaux avec deux étriers verticaux forment un cadre rigide de forme sensiblement rectangulaire ou éventuellement carrée.

Un tel dispositif offre donc des avantages en ce qui concerne la manutention la légèreté et l'encombrement de la structure à l'état démonté donc le transport et la facilité de montage contenu du petit nombre de pièces et de la simplicité de chacune des pièces.

Selon une caractéristique particulière de l'invention, des contre-plaques de forme appropriée sont prévues pour venir s'encastrer, en position montée, dans des cavités réalisées sur la face longitudinale verticale dudit étrier opposée à celle où sont fixées les traverses.

Ces contre-plaques font office de contre-écrou pour maintenir la structure dans son état final. De plus, elles peuvent être remplacées par des traverses d'une deuxième ossature de rangement identique à la première, afin d'agrandir le meuble initial.

Grâce à ces éléments, le dispositif selon l'invention présente une structure évolutive qui permet à tout utilisateur d'agrandir son meuble de rangement à volonté et de façon simple, par unique échange de contreplaques avec la traverse de la structure à rajouter.

D'autres buts, caractéristiques et avantages de l'invention apparaitront clairement à la lumière de la description explicative qui va suivre en référence aux dessins annexés représentant un mode de réalisation actuellement préféré de l'invention et dans lesquels:

La figure 1 est une vue en perspective en partie éclatée avec arrachement partiel d'un dispositif formant ossature rigide selon la présente invention dont le montage est pratiquement achevé à l'exception du montage des étriers supérieurs et des traverses longitudinales supérieures.

La figure 2 est une vue de détail agrandie en coupe partielle selon la ligne de trace II–II de la figure 1.

La figure 3 est une vue en coupe selon la ligne de trace III–III de la figure 1, et

La figure 4 est une vue en coupe selon la ligne de trace IV–IV de la figure 3.

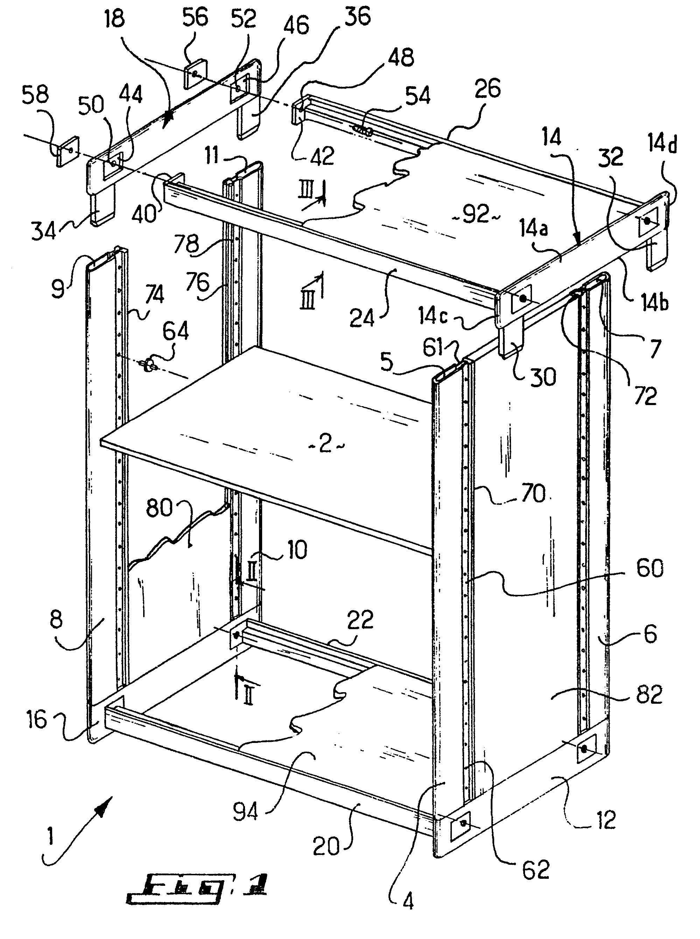

En référence aux figures 1 à 4, un dispositif formant ossature rigide 1 notamment pour meuble de rangement par exemple à rayonnage 2, comprend des montants 4, 6, 8, 10 normalement verticaux maintenus latéralement espacés entre eux par des étriers normalement horizontaux 12, 14, 16, 18 et longitudinalement espacés par des traverses 20, 22, 24, 26 normalement horizontales longitudinales.

Selon l'invention, les étriers 12, 14, 16, 18 sont pourvus de tenons tels que 30, 32, 34, 36 extérieurement saillants disposés sensiblement dans le plan longitudinal de l'étrier et sensiblement perpendiculairement aux bords longitudinaux tels que 14a, 14b de l'étrier. Les tenons tels que 30, 32, 34, 36 sont destinés à venir s'emboîter ou s'encastrer, de préférence à force, dans des logements correspondants tels que 5, 7, 9, 11 correspondant prévus en bout des extrémités des montants verticaux 4, 6, 8, 10, respectivement.

Selon une caractéristique particulière de l'invention, les tenons tels que 30, 32, 34, 36 sont disposés en retrait des bords latéraux, par exemple 14c, 14d, de l'étrier 14 de sorte qu'après emboîtement d'un tenon sur un montant vertical le bord latéral de l'étrier se trouve dans le prolongement du bord extérieur du montant vertical, comme cela se voit clairement à la figure 1 pour la partie inférieure du dispositif représenté à l'état monté.

Selon une autre caractéristique particulièrement avantageuse du dispositif selon l'invention, les traverses longitudinales 20, 22, 24, 26 comportant à leurs extrémités des goussets tels que 40, 42, disposés perpendiculairement au plan longitudinal de la traverse (24, 26 respectivement), venant en position montée s'encastrer dans des cavités, telles que 44, 46, associées prévues sur chaque face longitudinale des étriers 14, 18 non loin de ses bords latéraux, tels que 14c, 14d, comme cela se conçoit bien à partir de la figure 1.

Les goussets tels 40, 42 sont fixés dans les cavités associées telles que 44, 46 par tout moyen approprié. Par exemple selon le mode de réalisation représenté, les goussets tels que 40, 42 et les cavités telles que 44, 46 comportent des orifices dont ceux qui sont visibles ont été numérotés 48, 50, 52 les traversant de part en part et permettant l'insertion de vis telles que 54 coopérant avec par exemple des contre-plaques telles que 56, 58 prévues elles aussi de forme appropriée pour venir s'encastrer dans la cavité réalisée sur la face de l'étrier opposée à celle où est fixée la traverse.

Avantageusement, les montants verticaux 4, 6, 8, 10 sont constitués par des tubes profilés de section approximativement rectangulaire dont les extrémités ouvertes définissent les logements 5, 7, 9, 11 précités de réception des tenons tels que 30, 32, 34, 36 des étriers.

Selon une caractéristique particulière de ces montants verticaux, les faces latérales de ceux-ci comportent, de préférence vers le bord intérieur du montant vertical, deux gorges verticales par exemple 60, 61 pour le montant vertical 4, tous les montants verticaux étant identiques. Chaque gorge verticale par exemple 60, 61 est pourvue de moyens 62 de fixation d'accessoires tels que taquets-support 64 pour rayonnage 2, paumelles pour portes pleines ou vitrées, glissières de tiroirs, axes pour abattants ou ferrures diverses. Ces moyens peuvent être par exemple pour le cas d'accessoires formés par des taquets support des trous régulièrement espacés ou encore un profilage approprié permettant de coulisser une plaquette taraudée afin d'obtenir la fixation des accessoires précités à toute hauteur souhaitée.

Selon une autre caractéristique particulière, le bord intérieur ou face arrière 70, 72, 74, 76 de chaque montant vertical 4, 6, 8, 10, respectivement comporte dans son épaisseur une rainure verticale, comme la rainure verticale 78 du montant 10 que l'on voit particulièrement bien à la figure 1 prévue pour le verrouillage de panneaux de remplissage latéraux 80, 82.

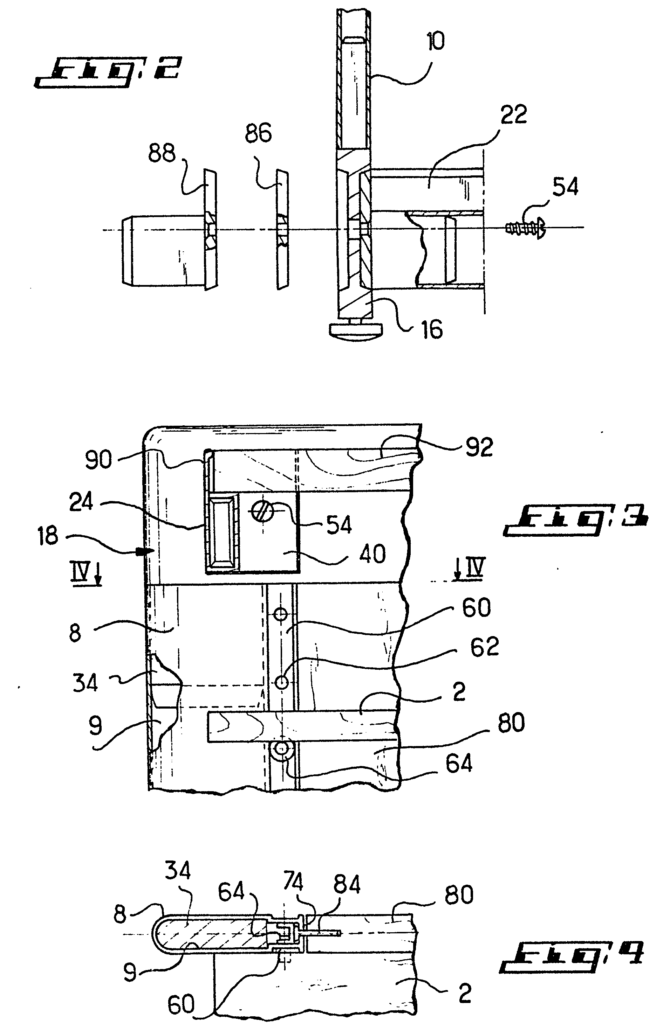

Ces panneaux de remplissage latéraux 80, 82 peuvent être verrouillés par exemple comme représenté à la figure 4 et comme connu en soi, par le pivotement d'un disque excentré 84, logé dans l'épaisseur du panneau 80 et venant saillir dans la rainure 74 de la face arrière du montant 8 associé.

Selon une autre caractéristique particulière de ce dispositif, comme entièrement visible à la figure 2, les goussets et les cavités ont une forme pyramidale à faible pente ce qui permet d'obtenir un blocage parfait lors de leur mise en place et serrage.

En référence aussi à la figure 2, on notera que dans le cas où il est nécessaire d'ajouter un élément pour agrandir la structure il suffit de déboulonner la contre-plaque 86 servant d'écrou et de la remplacer par une nouvelle traverse 88 longitudinale de prolongation. La contre-plaque 86 sert alors d'écrou pour la fixation du cadre nouvellement mis en place.

D'autre part, selon encore une autre caractéristique de la présente invention, comme clairement visible à la figure 3, les traverses longitudinales telles que 24 sont constituées par des barres creuses à section carrée ou rectangulaire dont une paroi verticale comporte un prolongement 90 saillant vers le haut en position montée, comme représenté, de manière à définir un logement en L de réception d'un toit 92 ou fond 94 pour le dispositif.

Ainsi, on peut arriver dans certains cas à obtenir un meuble complètement fermé.

Selon d'autres caractéristiques particulières, par exemple les cavités telles que 44, 46 peuvent être décalées vers l'intérieur du dispositif par rapport aux tenons associés 34, 36. D'autre part, tous les éléments formant le dispositif, c'est-à-dire les montants, les étriers et les traverses sont réalisés par filage ou moulage, par exemple par injection et sont ainsi avantageusement réalisés en matière plastique ou en alliage léger ou toute autre matière appropriée.

Enfin, le bord vertical extérieur de chaque montant vertical peut présenter diverses formes, par exemple être en demi-rond ou arrondi, plat, ovoïde ou avec rainure en creux, de manière à obtenir un aspect particulièrement esthétique.

## Revendications

1. Dispositif formant ossature rigide, notamment pour meuble de rangement, par exemple à rayonnage, comprenant:
- des traverses essentiellement horizontales longitudinales (20, 22, 24, 26);
- des étriers essentiellement horizontaux latéraux (12, 14, 16, 18) longitudinalement espacés par lesdites traverses;
- des montants essentiellement verticaux (4, 6, 8, 10) maintenus latéralement espacés entre eux par lesdits étriers;
- des premiers moyens d'assemblage entre lesdits étriers et lesdits montants formés par des tenons (30, 32, 34, 36) extérieurement saillants, disposés sensiblement dans le plan longitudinal de l'étrier sensiblement perpendiculairement aux bords longitudinaux de l'étrier, destinés à venir s'emboîter ou s'encastrer, de préférence de force, dans des logements (5, 7, 9, 11 respectivement) correspondants prévus en bout des extrémités des montants verticaux (4, 6, 8, 10 respectivement;
- des deuxièmes moyens d'assemblage entre lesdits étriers et lesdites traverses;
- les premiers moyens d'assemblage sont réalisés solidaires desdits étriers;
caractérisé en ce que
- les deuxièmes moyens d'assemblage sont formés par des goussets (tels que 40, 42) pratiqués aux extrémités respectives des traverses longitudinales et disposés perpendiculairement au plan longitudinal de la traverse destinés à coopérer avec des cavités (telles 44, 46) prévues sur chaque face longitudinale verticale des étriers non loin de ses bords latéraux pour recevoir, de façon encastrée en position montée, les goussets associés de chaque traverse, lesdits goussets étant fixés dans lesdites cavités correspondantes par tout moyen approprié.

2. Dispositif selon la revendication 1, caractérisé en ce que les gousset sont, en position montée, dirigés vers l'intérieur du dispositif par rapport aux traverses longitudinales.

3. Dispositif selon la revendication 1 ou 2, caractérisé en ce que les goussets (tels que 40, 42) et les cavités (telles que 44, 46) ont une forme pyramidale à faible pente.

4. Dispositif selon l'une des revendications 1 à 3, caractérisé en ce que les cavités (telles que 44, 46) sont décalées vers l'intérieur par rapport aux tenons (34, 36 respectivement).

5. Dispositif selon l'une quelconque des revendications 1 à 4, caractérisé en ce que des contreplaques (telles que 56, 58) de forme appropriée sont prévues pour venir s'encastrer, en position montée, dans des cavités réalisées sur la face longitudinale verticale dudit étrier opposée à celle où sont fixées les traverses.

6. Dispositif selon l'une des revendications 1 à 5 caractérisé en ce que les tenons (tels que 30, 32, 34, 36 sont disposés en retrait des bords latéraux de l'étrier (14, 18, respectivement) de sorte qu'après emboîtement d'un tenon sur un montant vertical le bord latéral de l'étrier se trouve dans le prolongement du bord extérieur du montant vertical.

7. Dispositif selon l'une des revendications 1 à 6, caractérisé en ce que les montants verticaux (4, 6, 8, 10) sont constitués par des tubes profilés de section approximativement rectangulaire dont les extrémités ouvertes définissent les logements précités de réception des tenons tels que (34, 36) des étriers.

8. Dispositif selon l'une quelconque des revendications 1 à 7, caractérisé en ce que le bord intérieur ou face arrière (70, 72, 74, 76) du montant vertical (4, 6, 8, 10 respectivement) comporte dans son épaisseur une rainure verticale (telle que 78) pour la face arrière (76) prévue pour le verrouillage de panneaux (80, 82) de remplissage latéraux.

9. Dispositif selon l'une quelconque des revendications 1 à 8 caractérisé en ce que les traverses longitudinales sont constituées par des barres creuses à section carrée ou rectangulaire dont une paroi verticale comporte un prolongement (90) saillant vers le haut en position montée de manière à définir un logement en L de réception d'un toit (92) ou fond (94) pour le dispositif.

10. Dispositif selon l'une quelconque des revendications 1 à 9, caractérisé en ce que les montants, étriers et traverses sont réalisés par filage ou moulage, par exemple par injection.

## Claims

1. Device forming a rigid framework in particular for a storage unit for instance with a shelving, comprising:
- essentially horizontal longitudinal cross members (20, 22, 24, 26);
- essentially horizontal lateral yokes (12, 14, 16, 18) longitudinally spaced from the said cross members;
- essentially vertical uprights (4, 6, 8, 10) kept laterally spaced from each other by the said yokes;
- first assembling means between the said yokes and the said uprights, formed of externally projecting lugs (30, 32, 34, 36) disposed substantially in the longitudinal plane of the yoke substantially perpendicularly to the longitudinal edges of the yoke and adapted to be caused to nest or to fit preferably forcibly into corresponding recesses (5, 7, 9, 11, respectively) provided endwise of the extremities of the vertical uprights (4, 6, 8, 10, respectively);
- second assembling means between the said yokes and the said cross members;
- the first assembling means being made solid with the said yokes;
characterized in that
- the second assembling means are formed of gussets (such as 40, 42) arranged at the respective ends of the longitudinal cross members and disposed perpendicularly to the longitudinal plane of the cross member and adapted to co-operate with cavities (such as 44, 46) provided on each longitudinal vertical face of the yokes not far from its lateral edges to receive in a built-in manner in the mounted position the associated gussets of each cross member, the said gussets being secured in the said corresponding cavities by any suitable means.

2. Device according to claim 1, characterized in that in the mounted position, the gussets are directed towards the inside of the device with respect to the longitudinal cross members.

3. Device according to claim 1 or 1, characterized in that the gussets (such as 40, 42) and the cavities (such as 44, 46) have a pyramidal shape with a small slope.

4. Device according to one of claims 1 to 3, characterized in that the cavities (such as 44, 46) are offset inwards with respect to the lugs (34, 36, respectively).

5. Device according to any one of claims 1 to 4, characterized in that back-plates (such as 56, 58) of a suitable shape are provided to be caused to fit in the mounted position into cavities formed on the vertical longitudinal face of the said yoke opposite from that where the cross members are fastened.

6. Device according to one of claims 1 to 5, characterized in that the lugs (such as 30, 32, 34, 36) are disposed so as to be set back from the lateral edges of the yoke (14, 18, respectively), so that after the fitting of a lug on a vertical upright, the lateral edge of the yoke is located in the extension of the outer edge of the vertical upright.

7. Device according to one of claims 1 to 6, characterized in that the vertical uprights (4, 6, 8, 10) are constituted by sectional tubes with approximately rectangular sections the open ends of which define the aforesaid recesses for receiving lugs such as (34, 36) of the yokes.

8. Device according to any one of claims 1 to 7, characterized in that the inner edge or rear face (70, 72, 74, 76) of the vertical upright (4, 6, 8, 10, respectively) comprises within its thickness a vertical groove (such as 78) for the rear face (76) provided for the locking of lateral filling panels (80, 82).

9. Device according to any one of claims 1 to 8, characterized in that the longitudinal cross members are constituted by hollow bars of square or rectangular sections one vertical wall of which comprises an extension (90) projecting upwards in the mounted position so as to define an L-shaped recess for receiving a roof (92) or bottom (94) for the device.

10. Device according to any one of claims 1 to 9, characterized in that the uprights, yokes and cross members are made by extrusion or moulding, for instance injection moulding.

### Patentansprüche

1. Ein starres Gerüst bildende Vorrichtung insbesondere für ein Aufräumungsmöbel z.B. mit Regalen, umfassend:
– im wesentlichen waagerechte Längsquerstreben (20, 22, 24, 26);
– in Längsrichtung durch die besagten Querstreben in Abstand gehaltene, im wesentlichen waagerechte Seitenbügel (12, 14, 16, 18);
– durch die besagten Bügel seitlich in Abstand voneinander gehaltene, im wesentlichen senkrechte Ständer (4, 6, 8, 10);
– erste Zusammenfügungsmittel zwischen den besagten Bügeln und den besagten Ständern, welche durch nach aussen vorstehende, im wesentlichen in der Längsebene des Bügels im wesentlichen senkrecht zu den Längskanten des Bügels angeordnete Zapfen (30, 32, 34, 36) gebildet sind, die dazu bestimmt sind, in entsprechende, an der Spitze der Enden der senkrechten Ständer (4, 6, 8, 10 resp.) vorgesehenen Aussparungen (5, 7, 9, 11 resp.) vorzugsweise mit Gewalt eingelassen bzw. eingespannt zu werden;
– zweite Zusammenfügungsmittel zwischen den besagten Bügeln und den besagten Querstreben;
– wobei die ersten Zusammenfügungsmittel mit den besagten Bügeln festverbunden hergestellt sind; dadurch gekennzeichnet
– dass die zweiten Zusammenfügungsmittel durch jeweils an den Enden der Längsquerstreben angebrachte und senkrecht zu der Längsebene der Querstrebe angeordnete Endstücke (wie 40, 42) gebildet sind, welche bestimmt sind, mit an jeder senkrechten Längsfläche der Bügel nicht weit von ihren Seitenrändern vorgesehenen Ausnehmungen zusammenzuwirken, um die jeder Querstrebe zugeordneten Endstücke in eingebauter Lage eingesetzt aufzunehmen, wobei die besagten Endstücke in den besagten entsprechenden Ausnehmungen durch jedes geeignete Mittel befestigt sind.

2. Vorrichtung nach Anspruch 1, dadurch gekennzeichnet, dass die Endstücke in eingebauter Stellung nach innen der Vorrichtung in Bezug auf die Längsquerstreben gerichtet sind.

3. Vorrichtung nach Anspruch 1 oder 2, dadurch gekennzeichnet, dass die Endstücke (wie 40, 42) und die Ausnehmungen (wie 44, 46) eine pyramidenförmige Gestalt mit schwacher Neigung haben.

4. Vorrichtung nach einem der Ansprüche 1 bis 3, dadurch gekennzeichnet, dass die Ausnehmungen (wie 44, 46) nach innen in Bezug auf die Zapfen (34, 36 resp.) versetzt sind.

5. Vorrichtung nach irgend einem der Ansprüche 1 bis 4, dadurch gekennzeichnet, dass Gegenplatten (wie 56, 58) geeigneter Gestalt vorgesehen sind, um in eingebauter Lage in Ausnehmungen eingesetzt zu werden, welche an der senkrechten Längsseite des besagten Bügels, welche derjenigen, wo die Querstreben befestigt sind, entgegengesetzt ist, angeordnet sind.

6. Vorrichtung nach einem der Ansprüche 1 bis 5, dadurch gekennzeichnet, dass die Zapfen (wie 30, 32, 34, 36) gegenüber den Seitenkanten des Bügels (14, 18 resp.) zurückgesetzt angeordnet sind, so dass nach dem Einsetzen eines Zapfens auf einen senkrechten Ständer, der Seitenrand des Bügels sich in der Verlängerung des Aussenrandes des senkrechten Ständers befindet.

7. Vorrichtung nach einem der Ansprüche 1 bis 6, dadurch gekennzeichnet, dass die senkrechten Ständer (4, 6, 8, 10) aus Profilrohren mit annähernd rechteckigem Querschnitt bestehen, deren offene Enden die vorgesagten Aussparungen zur Aufnahme der Zapfen wie (34, 36) der Bügel begrenzen.

8. Vorrichtung nach irgend einem der Ansprüche 1 bis 7, dadurch gekennzeichnet, dass der Innenrand oder die Rückseite (70, 72, 74, 76) des senkrechten Ständers (4, 6, 8, 10 resp.) in seiner Dicke eine senkrechte Nut (wie 78) für die Rückseite (76) aufweist, welche für das Verriegeln von seitlichen Füllplatten (80, 82) vorgesehen ist.

9. Vorrichtung nach irgendeinem der Ansprüche 1 bis 8, dadurch gekennzeichnet, dass die Längsquerstreben durch hohle Stangen mit quadratischem oder rechteckigem Querschnitt gebildet sind, deren eine senkrechte Wandung eine in eingebauter Lage aufwärts vorragende Verlängerung (90) aufweist, um eine L-förmige Aussparung zur Aufnahme eines Daches (92) bzw. Bodens (94) für die Vorrichtung abzugrenzen.

10. Vorrichtung nach irgendeinem der Ansprüche 1 bis 9, dadurch gekennzeichnet, dass die Ständer, Bügel und Querstreben durch Strangpressen oder Formgiessen z.B. Spritzguss hergestellt werden.

Fig. 1

**0 106 734**

Fig. 2

Fig. 3

Fig. 4